# EUROPEAN PATENT APPLICATION

(11) **EP 2 704 083 A1**
(43) Date of publication of application: **05.03.2014**
(21) Application number: 12182393.4
(22) Date of filing: 30.08.2012
(51) Int. Cl.: G06Q 30/02

(54) **Method of minimising advertising space**

(71) Applicant: QBuy International ApS, 2900 Hellerup (DK)
(72) Inventor: Knudesn, Paul, 2800 Lyngby (DK); Kunde, Lennard, 2840 Holte (DK); Holst Schmidt, Henrik, 2840 Holte (DK)
(74) Representative: Hoffmann Dragsted A/S

(57) **Abstract**

The present invention relates to a mobile device-based method of minimising advertising space in an advertising campaign, the method comprising the steps of a seller providing a database containing information on a product catalogue comprising a plurality of products and information on the inventory status of the plurality of products, the seller generating a scan-able uniform resource locator directing code comprising: a direct buy hyperlink directed towards an immediate purchase location in an internet-based shopping environment for immediate purchase of a subset of the product catalogue, and the seller placing the scan-able uniform resource locator directing code in an advertisement, and placing the advertisement on the advertisement location, a buyer scanning the scan-able uniform resource locator directing code with a mobile device using a URL scanning application or using the mobile device advertising application, thereby being automatically directed to a specific address in a URL browser or in the mobile device advertising application on the mobile device of the buyer, the seller requesting billing details on the buyer, the buyer providing a set of billing details and confirming a shipment, the seller confirming the shipment, and wherein the seller is placing the scan-able uniform resource locator directing code in an advertisement directed towards a subset of the product catalogue, and the seller offers the buyer to buy at least one additional product from the product catalogue in the same shipment using the entered billing details.

## Description

### Field of the invention

The present invention relates to a method of minimising advertising space in an advertising campaign.

### Background art

Retail outlets, fast food chains, supermarkets, etc. are continuously looking to promote their products and services to shoppers and customers. Moreover, these businesses typically use a range of different media including TV, outdoor media such as billboards, print circulars and online media to communicate the promotional offers to their customers.

A common technique used by retailers is to use a mix of different media when running promotional campaigns. For instance, a supermarket chain might run a TV and an online promotional campaign to raise awareness of a particular product offer. The same supermarket chain might also run an outdoor media campaign on billboards and utilise posters in airports and shopping centres to reach customers on the move. The promotional offer is invariably supported by some form of print media such as a newspaper ad, a magazine ad or a direct mail catalogue. At the store the promotional message is reinforced using point of sale posters and visual merchandising displays to remind shoppers of the promotional offers. This last stretch in the path to purchase is the most powerful promotional space as you can stimulate impulse purchase behaviour when consumers are in close proximity to the point of sale by having posters next to the actual products in the campaign.

Furthermore, over the last decade advertising space in the public domain has become increasingly expensive. This applies to press advertising, billboard advertising, in-store advertising etc. Furthermore, the profit per sold unit has typically gone down in the same period for most consumer goods, which leaves less and less room for advertising costs on consumer goods. Therefore, marketing departments throughout a wide variety of industries are struggling to increase conversion rates from advertisements in the public domain while keeping costs down. Also print advertising circulars have been increasingly regulated due to the excessive use of paper which does not fit into modern green policies of companies or governmental visions of politicians. Therefore there is an increased need for minimising cost-intensive advertising space while increasing conversion rates on advertisements.

### Summary of the invention

It is an object of the present invention to wholly or partly overcome the above disadvantages and drawbacks of the prior art. More specifically, it is an object to provide an improved mobile device-based method of minimising advertising space in an advertising campaign. The method of minimising advertising space results in lowered energy consumption required when carrying out an advertising campaign; it increases the conversion rate of the advertising campaign, thereby making fewer campaigns as effective as a higher number of campaigns, which results in cost and energy savings and raises the ability of advertising campaigns to be green in terms of power consumption.

The above objects, together with numerous other objects, advantages, and features, which will become evident from the below description, are accomplished by a solution in accordance with the present invention by a method comprising the steps of a seller providing a database containing information on a product catalogue comprising a plurality of products and information on the inventory status of the plurality of products, and the seller generating a scan-able uniform resource locator directing code comprising a direct buy hyperlink directed towards an immediate purchase location in an internet-based shopping environment for immediate purchase of a subset of the product catalogue, and the seller linking the scan-able uniform resource locator directing code to an advertising webpage or a mobile device advertising application, the seller placing the scan-able uniform resource locator directing code in an advertisement, and placing the advertisement on the advertisement location, a buyer scanning the scan-able uniform resource locator with a mobile device using a URL scanning application or using the mobile device advertising application, thereby being automatically directed to a specific address in a URL browser or in the mobile device advertising application on the mobile device of the buyer, the seller requesting billing details on the buyer, the buyer providing a set of billing details and confirming a shipment, the seller confirming the shipment, and wherein the seller places the scan-able uniform resource locator directing code in an advertisement directed towards a subset of the product catalogue, and the seller offers the buyer to buy at least one additional product from the product catalogue in the same shipment using the entered billing details; a minimisation of required advertising space is achieved by advertising only a subset of the product catalogue while increasing conversion rates of converting an advertisement into a sale due to easy access to the complete product catalogue, the direct buy hyperlink and the additional offer in combination.

Further, the method may comprise the steps of the seller offering to save the billing details for future use, and the buyer accepting or rejecting the offer of saving the billing details for future use.

Also, the method may comprise a step of adding a media code to the scan-able uniform resource locator directing code.

The method according to invention may also comprise the step of adding a media code to the scan-able uniform resource locator directing code, wherein the media code may comprise information about the advertisement location.

Additionally, the method according to the present invention may comprise a step of placing the advertisement directly on a consumer product.

Moreover, the method may further comprise a step of the buyer providing a set of geotagging geographical coordinates.

The method may comprise a step of the buyer providing a set of internet protocol data referencing the mobile device used for the scan.

The method may also comprise a step of the buyer providing a set of characteristic mobile device data such as operating system, screen size, mobile device brand and model number.

In a method according to invention, the scan-able uniform resource locator directing code may be scan-able by camera.

In a method according to invention, the scan-able uniform resource locator directing code may be scan-able by sound recognition.

In a method according to invention, the scan-able uniform resource locator directing code may be linked to a database image and the database image may be recognisable by mobile device product recognition by camera.

The method according to the present invention may further comprise a step of informing the buyer of the environmental impact of the purchase, e.g. in terms of carbon dioxide emissions.

Also, the method according to the present invention may further comprise a step of informing the buyer of the health impact of the purchase, e.g. adverse effects of tobacco products, high carbohydrate level products etc.

Further, the method according to the present invention may further comprise a step of saving the scan-able uniform resource locator directing code scanned by the buyer on the mobile device when the scan is performed when the mobile device is offline and a further step of allowing the buyer to continue the purchase when the mobile device is online again.

Moreover, the method may further comprise a step of providing the buyer with a special promotional code for obtaining an additional price reduction on a purchase.

Finally, the method may further comprise a step of the seller providing a set of purchase details to a reseller.

### Brief description of the drawings

The invention and its many advantages will be described in more detail below with reference to the accompanying schematic drawings, which for the purpose of illustration show some non-limiting embodiments and in which
Fig. 1 shows an overall conceptual view illustrating a method for minimising advertising space in an advertising campaign, and
Fig. 2 is a schematic view illustrating a system for minimising advertising space in an advertising campaign.

The figures are highly schematic and not necessarily to scale, and they show only those parts which are necessary in order to elucidate the invention, other parts being omitted or merely suggested.

### Detailed description of the invention

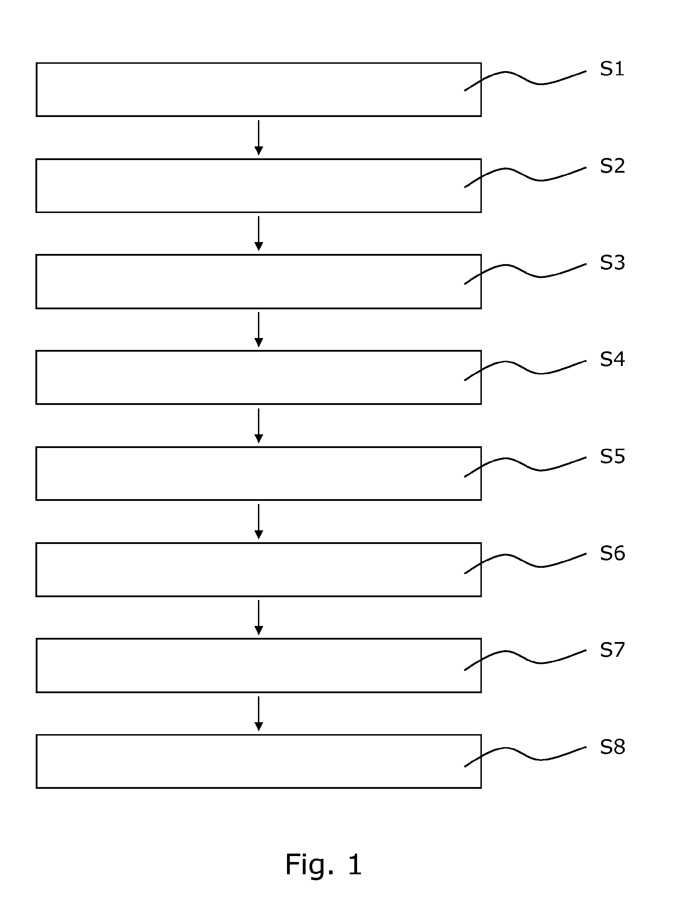

Fig. 1 shows an overall conceptual view illustrating a method for minimising advertising space in an advertising campaign. The method comprises a first step S1 of a seller providing a database containing information on a product catalogue comprising a plurality of products and information on the inventory status of the plurality of products. The database behind the method may be an internet-based webshop with inventory status for keeping track of available products, product codes etc. A second step S2 is the seller generating a scan-able uniform resource locator directing code. The seller must generate a scan-able uniform resource locator (URL) directing code for placement in advertisements. The URL directing code comprises a direct buy hyperlink directed towards an immediate purchase location in an internet-based shopping environment for immediate purchase of a subset of the product catalogue. Instead of linking to the complete webshop or a specific product page comprising additional information on the specific product as in ordinary uses of scan-able URL directing code such as quick response (QR) codes, the scan-able URL directing code according to this invention is directed to an immediate purchase location in an internet-based shopping environment for immediate purchase of a subset of the product catalogue. QR codes have been used in print marketing for some time enabling customers with a camera-enabled smartphone and a QR Code reader installed to scan these QR Codes and be directed to a website for further detailed information. With the emergence of QR Code technologies, the seller is able to bridge the physical world of promotional print with the online world, creating an abundance of new ways to communicate directly with customers on the move. This immediate purchase location is ideal for a selected group of advertising campaign products, e.g. products having a reduced price, new products, outlet products etc. The scan-able URL directing code may alternatively be NFC or EAN codes. The next and third step S3 of the method is the seller placing the scan-able uniform resource locator directing code in an advertisement, and placing the advertisement on the advertisement location. When a seller is setting up an advertising campaign, he could select a subset of his product catalogue for special offers and decide on a location or several locations in which to show the advertisement, such as on TV, billboards, in print circulars, online media etc. by generating a unique scan-able uniform resource locator directing code and placing exactly this scan-able uniform resource locator directing code in a specific location information on the location may also be part of the information contained in the scan-able uniform resource locator, so that information on both product and location of the advertisement is available to the seller when a buyer subsequently scans the unique scan-able uniform resource locator. By tracking individual smartphone scans of a printed QR Code, a powerful marketing intelligence tool is provided whereby you can now measure the frequency and distribution of scans by each device and gauge the effectiveness of a campaign offer right down to an individual user. This is extremely powerful for retail marketers since they may launch a printed promotional campaign and measure in real time the effectiveness of the promotion in terms of increasing sales or customer engagement on a consumer by consumer basis. This information is extremely valuable to marketing people in their development of return on investment analyses for every promotional campaign they run. The next step, when the scan-able uniform resource locator is now placed in an advertisment, is the fourth step S4 of the method and comprises a buyer scanning the scan-able uniform resource locator with a mobile device using a URL scanning application or using the mobile device advertising application. Today most smartphones have built-in scanners which may be used for scanning the scan-able URL, but with the emergence of easily accessible mobile applications, the buyer may alternatively use a mobile device advertising application for scanning provided by the seller. Regardless of the type of scanner chosen by the buyer, the buyer is automatically directed to a specific address in a URL browser, or if the buyer uses a mobile device advertising application provided by the seller, the buyer is directed to a URL address handled directly in the mobile device advertising application. The fifth step S5 is the seller requesting billing details on the buyer. In order to buy the scanned product, the seller requests the buyer to provide billing details such as credit card information, address of delivery etc. Consequently, the sixth step S6 is the buyer providing a set of billing details and confirming a shipment, and finally the seller confirms the shipment after having checked the billing details in the seventh step S7. Furthermore, the method comprises a step of the seller placing the scan-able uniform resource locator directing code in an advertisement directed towards a subset of the product catalogue, the seller offering the buyer to buy at least one additional product from the product catalogue in the same shipment using the entered billing details. By showing a scan-able uniform resource locator directing code in an advertisement directed towards only a subset of the product catalogue, the advertisement space may be drastically reduced. An example is printed circulars which over the years have become increasingly extensive. Such coloured magazines are expensive to produce and require extensive use of wood, chemicals and energy in general, which is not in line with green policies and the desire to cut costs in companies in general. On the other hand a proven factor in raising sales is advertising, and therefore an increase in conversion rates of advertisements leading to sales is very valuable. By only placing a subset of the product catalogue in the advertisement, costs are reduced because the necessary space in the advertisement is reduced. And in combination with the addition of the scan-able uniform resource locator directing code which enables a buyer viewing the advertisement to easily access the rest of the product catalogue or a bigger subset of the catalogue online, the buyer may easily find more products in the same category or within the same advertising campaign depending on how the seller has designed the advertisement campaign. The additional products exposed to the buyer increases conversion rates of the advertisement. One problem always faced by advertisers is the problem of how to benefit from the impulsive behaviour of buyers when they see a promotional offer or a new product they wish to buy. If the buyer cannot immediately buy the product, the impulsive behaviour turns into a more rational and calculating behaviour. For instance when the buyer needs to go home after having seen an interesting billboard commercial in the public domain and has to open up a computer or remember to visit the store of the advertiser, the purchase becomes a more rational action, where the buyer calculates pros and cons of the purchase. The present invention enables the seller to catch the buyer in the impulsive behaviour, where the buyer buys instantaneously and maybe even buys one of the additionally offered products, and hence situations where the buyer rationalises away from the buy, forgets the offer due to a certain time lapse or simply has no time to visit the store of the advertiser to purchase the product may be avoided.

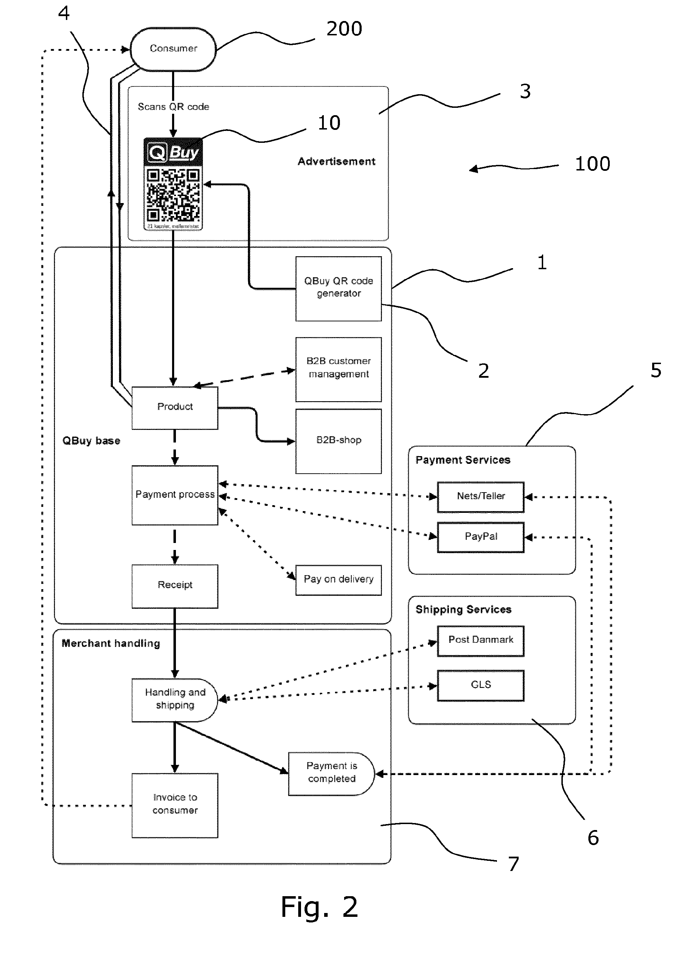

Fig. 2 is a schematic view illustrating a system 100 for minimising advertising space in an advertising campaign. The seller sets up the advertising campaign in a database 1 by generating one or more scan-able URL directing codes 10 by means of a scan-able URL directing code generator 2 and linking the scan-able URL directing codes 10 to a subset of a product catalogue. Subsequently the seller places the scan-able URL directing code in an advertisement 3. After having seen the advertisement 3, the buyer or consumer 200 may be intrigued by the advertisement to an extent that prompts him to do a direct buy. The scan-able uniform resource locator directing code comprises a direct buy hyperlink directed towards an immediate purchase location in an internet-based shopping environment for immediate purchase of a subset of the product catalogue so that the buyer knows that it is immediately possible to buy the advertised item. When buyers scan the scan-able uniform resource locator directing code, they are automatically diverted to a webshop facility of the seller and to the exact product scanned. By entering billing details, i.e. payment details and shipping details and confirming a buy, the advertised and scanned item is sent directly to the buyer. Before entering the billing details, the seller makes an additional offer 4 to the buyer, e.g. from the same group of items or other advertised items in this advertising campaign. Payment services 5 and shipping services 6 of such a system 100 are merely conventional routes of payment and shipping. The database controlling the advertising campaign offers and the linked scan-able URL directing codes 10 may be controlled by a third party acting on behalf of the seller 7 such as shown in Fig. 2, where the database may be handled by another company taking care of the advertisement campaigns on behalf of the seller.

The method may further comprise the steps of the seller offering to save the billing details for future use, and the buyer accepting or rejecting the offer of saving the billing details for future use. In order to make a subsequent purchase easier and faster than the first purchase, the buyer may be prompted to save the billing details entered in the first purchase. Also the loyalty to this type of sales channel system is increased if the billing details are already in the system.

The method may also comprise a step of adding a media code to the scan-able uniform resource locator directing code. By incorporating additional information into the scan-able uniform resource locator directing code, the seller may gain valuable information about the buyer or the scanner, the scanner being a buyer not completing a purchase after having scanned the scan-able uniform resource locator directing code. Media codes may comprise information on the advertisement location, a set of geotagging geographical coordinates, a set of internet protocol data referencing the mobile device used for the scan, a set of characteristic mobile device data such as operating system, screen size, mobile device brand and model number etc. Also manually entered details may be requested, i.e. the buyer may be asked to enter his postal code, gender, marital status etc. Such details are preferably voluntary, but may - in combination with an advantage for the buyer, e.g. the triggering of a buy credit or the promise of targeted additional sales - be comprehended as additional value to the buyer.

The scan-able uniform resource locator directing code may be scan-able by camera, sound recognition, NFC technology or other types of scanners for scanning codes. The scan-able uniform resource locator directing code may be represented in the advertisement or on the product by any recognisable code such as a characteristic symbol, key symbol, product aura, e.g. a characteristic colour code surrounding a product in an advertisement. The scan-able uniform resource locator directing code may be scan-able by visual means, acoustic means, tactile means, electromagnetic means or magnetic means. Alternatively, the scan-able uniform resource locator directing code may be linked to a database image so that by using image recognition software on the mobile device, the database image may be recognisable by the mobile device. This allows the buyer to buy products through a mobile application provided by the seller or possibly a group of sellers without the need for the seller to put a scan-able uniform resource locator directing code in the advertisement or on the product.

The method of the invention may comprise a step of informing the buyer of the environmental impact of the purchase, e.g. in terms of carbon dioxide emissions, so that the buyer is aware of the environmental impact of the purchase. This enables the buyer to easily become an environmentally conscious consumer. After making a plurality of purchases, the seller may even provide the buyer with a green profile as consumer based on the environmental impact of the plurality of products purchased by the buyer.

Analogously to the environmental impact, the seller may inform the buyer of the health impact of the purchase. Examples of health impact in terms of adverse effects may be lung cancer as a consequence of tobacco products, cardiovascular diseases caused by high fat level products or overweight caused by high carbohydrate level products.

Since advertisements may be located in offline zones such as aeroplanes or countryside locations with little or no mobile data coverage, the method according to invention may further comprise a step of saving the scan-able uniform resource locator directing code scanned by the buyer on the mobile device when the scan is performed. This allows the buyer to continue the buy when the mobile device is online again. This may also be used in situations when several consecutive scans are intended by the user, so that the buyer does not necessarily execute the buy after having scanned the first product but waits until all the consecutive scans have been performed.

To increase loyalty or increase the incentive to buy, the method may further comprise a step of providing the buyer with a special promotional code for obtaining an additional price reduction on a purchase. Examples could be to offer an additional 10% price reduction on an unrestricted purchase upon completion of 10 purchases.

The method of the invention may be seen as an autonomous sales channel. Therefore some sellers may want to pass on a set of purchase details to a reseller, the reseller then carrying out parts of the sale such as the shipping or even the entire purchase. This allows well-established companies to outsource such a new sales channel to companies specialised e.g. in internet trading.

QR Code (abbreviated from Quick Response Code) is the trademark for a type of matrix barcode (or two-dimensional code) first designed for the automotive industry. More recently, the system has become popular outside the industry due to its fast readability and large storage capacity compared to standard UPC barcodes. The code consists of black modules (square dots) arranged in a square pattern on a white background. The information encoded can be made up of four standardized kinds ("modes") of data (numeric, alphanumeric, byte/binary, Kanji), or through other kinds of supported data extensions comprising potentially any kind of data.

QR codes were formerly confined to industrial uses, but in recent years they have become common in consumer advertising and packaging, because the dissemination of smartphones "has put a barcode reader in everyone's pocket" for the first time. As a result, the QR code has become a focus of advertising strategy, since it provides quick and effortless access e.g. to the website of a trademark or brand. Beyond mere convenience to the consumer, the importance of this capability is that it increases the conversion rate, by coaxing qualified prospects further down the conversion funnel without any delay or effort, bringing the viewer to the advertiser's site immediately, where a longer and more targeted sales pitch or information on additional products may continue. Although initially used to track parts in vehicle manufacturing, QR Codes are now used in a much wider range of applications, including commercial tracking, entertainment and transport ticketing, product/loyalty marketing, and in-store product labelling. Most of these applications target mobile-phone users. Users can generate and print their own QR Codes for others to scan and use by visiting one of several pay or free QR Code-generating sites or applications. Today, nearly all smartphone devices have applications for scanning QR Codes.

Up until now QR Codes have mainly been used for storing addresses and Uniform Resource Locators (URLs) and put in magazines, on signs, on buses, on business cards, or on almost any object about which users might need additional information. Users with a camera phone equipped with the correct reader application can scan the image of the QR Code to display text, contact information, connect to a wireless network, or open a web page in the telephone's browser. This act of linking from physical world objects is termed hard linking or object hyperlinking. QR Codes may also be linked to a location to track where a code has been scanned. Either the application that scans the QR Code retrieves the geo information by using GPS or cell tower triangulation or the URL encoded in the QR Code itself is associated with a location.

By tracking individual smartphone scans of a printed QR Code, a powerful marketing intelligence tool is provided whereby you can now measure the frequency and distribution of scans by each device and gauge the effectiveness of a campaign offer right down to an individual user. This is the first time retail marketers can launch a printed promotional campaign, measure in real time the effectiveness of the promotion in terms of increasing sales or customer engagement on a consumer by consumer basis. This information is extremely valuable to marketing people in their development of return on investment analyses for every promotional campaign they run.

Preferably, for a brand marketer to take advantage of this new method in the present invention they would log in into the online QR Code Campaign system and set up a short URL-based QR code campaign. This would initially involve generating a campaign ID and Campaign name for this QR Code campaign in the internet-based shopping environment for immediate purchase as suggested by the method of the invention.

Although the invention has been described in the above in connection with preferred embodiments of the invention, it will be evident for a person skilled in the art that several modifications are conceivable without departing from the invention as defined by the following claims.

## Claims

1. A mobile device-based method of minimising advertising space in an advertising campaign, the method comprising the steps of:
- a seller providing a database (1) containing information on a product catalogue comprising a plurality of products and information on the inventory status of the plurality of products,
- the seller generating a scan-able uniform resource locator directing code (10)comprising:
- a direct buy hyperlink directed towards an immediate purchase location in an internet-based shopping environment for immediate purchase of a subset of the product catalogue, and
- the seller placing the scan-able uniform resource locator directing code (10) in an advertisement (3), and placing the advertisement on the advertisement location,
- a buyer (200) scanning the scan-able uniform resource locator directing code (10) with a mobile device using a URL scanning application or using the mobile device advertising application, thereby being automatically directed to a specific address in a URL browser or in the mobile device advertising application on the mobile device of the buyer (200),
- the seller requesting billing details on the buyer (200),
- the buyer (200) providing a set of billing details and confirming a shipment,
- the seller confirming the shipment, and
wherein,
- the seller places the scan-able uniform resource locator directing code in the advertisement being directed towards a subset of the product catalogue, and
- the seller offers the buyer (200) to buy at least one additional product from the product catalogue in the same shipment using the entered billing details.

2. A method according to claim 1, further comprising the steps of:
- the seller offering to save the billing details for future use, and
- the buyer (200) accepting or rejecting the offer of saving the billing details for future use.

3. A method according to claim 1 or 2, further comprising a step of adding a media code to the scan-able uniform resource locator directing code (10).

4. A method according to claim 3, wherein the media code comprises information about the advertisement location.

5. A method according to claims 1-4, further comprising a step of placing the advertisement (3) directly on a consumer product.

6. A method according to any of the preceding claims, further comprising a step of the buyer (200) providing a set of geotagging geographical coordinates.

7. A method according to claim 3, further comprising a step of the buyer (200) providing a set of internet protocol data referencing the mobile device used for the scan.

8. A method according to claim 3, further comprising a step of the buyer (200) providing a set of characteristic mobile device data such as operating system, screen size, mobile device brand and model number.

9. A method according to any of the preceding claims, wherein the scan-able uniform resource locator directing code is scan-able by camera.

10. A method according to any of the preceding claims, wherein the scan-able uniform resource locator directing code is scan-able by sound recognition.

11. A method according to any of the preceding claims, wherein the scan-able uniform resource locator directing code (10) is linked to a database image and wherein the database image is recognisable by mobile device product recognition by camera.

12. A method according to any of the preceding claims, further comprising a step of informing the buyer (200) of the environmental impact of the purchase, e.g. in terms of carbon dioxide emissions.

13. A method according to any of the preceding claims, further comprising a step of informing the buyer (200) of the health impact of the purchase, e.g. adverse effects of tobacco products, high carbohydrate level products etc.

14. A method according to any of the preceding claims, wherein the method further comprises a step of saving the scan-able uniform resource locator directing code (10) scanned by the buyer (200) on the mobile device when the scan is performed when the mobile device is offline and a further step of allowing the buyer (200) to continue the purchase when the mobile device is online again.

15. A method according to any of the preceding claims, further comprising a step of the seller providing a set of purchase details to a reseller.
